# EUROPEAN PATENT SPECIFICATION

(11) **EP 4 496 150 B1**
(45) Date of publication and mention of the grant of the patent: **09.12.2026**
(21) Application number: 23769778.4
(22) Date of filing: 14.03.2023
(51) Int. Cl.: H01R 31/06, H01R 13/73, B60L 53/16, B60L 53/18, B60L 53/302

(54) **CONNECTOR ASSEMBLY HAVING LIQUID COOLING FUNCTION AND VEHICLE**
VERBINDERANORDNUNG MIT FLÜSSIGKEITSKÜHLFUNKTION UND FAHRZEUG
ENSEMBLE CONNECTEUR AYANT UNE FONCTION DE REFROIDISSEMENT DE LIQUIDE ET VÉHICULE

(30) Priority: 14.03.2022 CN 202210248431
(43) Date of publication of application: 22.01.2025
(73) Proprietor: Changchun Jetty Automotive Technology Co., Ltd., Changchun City, Jilin Province 130000 (CN)
(72) Inventor: WANG, Chao, Changchun, Jilin 130000 (CN)
(74) Representative: Habermann, Hruschka & Schnabel
(86) International application number: PCT/CN2023/081356
(87) International publication number: WO 2023/174276

(56) References cited:
- CN-A- 107 039 117
- CN-A- 107 887 730
- CN-A- 108 199 162
- CN-A- 109 390 078
- CN-A- 109 712 746
- CN-A- 114 759 412
- CN-U- 209 729 598
- CN-U- 209 729 598
- CN-U- 210 984 369
- CN-U- 212 411 603
- CN-U- 214 279 663
- CN-U- 214 753 106
- CN-U- 217 823 615
- DE-A1- 102015 120 048
- JP-A- H0 982 143
- US-A- 5 591 937
- US-A1- 2020 303 093

## Description

### RELATED APPLICATION

The present disclosure claims priority to Chinese Patent Application No.202210248431.4, entitled "connector assembly having liquid cooling function, and vehicle", and filed to the China National Intellectual Property Administration on March 14, 2022.

### TECHNICAL FIELD

The present disclosure relates to the technical field of vehicle electrical appliances, and particularly to a connector assembly having a liquid cooling function, and a vehicle.

### BACKGROUND

New energy vehicles are increasingly popular, and during the normal use thereof, a very large current flows through a cable for electric energy transmission, such that a lot of heat is generated in both the cable and connectors. A high temperature will occur due to excessive heat, and the connection position of the cable and the surrounding connectors and fasteners will be failed due to the high temperature, which will affect the normal use of related devices, resulting in short circuit and open circuit, and even the danger of electric shock that is life-threatening.

Meanwhile, the cable in the vehicle produces strong electromagnetic interference due to the large current. In order to reduce the influence of the electromagnetic interference, the transmission cable usually uses a shielding net to shield the electromagnetic interference. At present, the conventional shielding net is braided with metal wires, and it is necessary to add a shielding braiding machine in the cable production equipment, such that the equipment price is high and a large area is occupied, resulting in a high price of the shielding cable of the connector. In addition, the shielding technology for the connector is not perfect enough at present, such that the electrical appliances in the vehicle are interfered with and cannot be used. Currently, there is no practical solution to the above problems. Therefore, the technical field of vehicle electrical appliances is in urgent need of a connector assembly with a small wire diameter and a low cable heat generation amount, which can realize automatic production and assembling. Conventional connector assemblies are known from the prior art, for example from DE102015120048A1, CN209729598U, US5591937A1, and US2020303093A1.

### SUMMARY

The present disclosure aims to provide new technical solutions of a connector assembly having a liquid cooling function and a vehicle. The connector assembly having a liquid cooling function of the present disclosure can reduce the failures of an electrical connection framework and a connection terminal caused by a high temperature during electrification, decrease the diameter of the electrical connection framework, prolong a service life of a connector, improve the safety of the whole vehicle, while shielding the electromagnetic interference.

The invention is defined in and limited by the independent claim. According to the invention, there is provided a connector assembly having a liquid cooling function, including at least one electrical connection framework and connectors connected to two ends of the electrical connection framework. An outer periphery of the electrical connection framework is sequentially sleeved with a first sleeve and a second sleeve. A first cavity is formed between an outer wall of the electrical connection framework and an inner wall of the first sleeve. A second cavity is formed between an outer wall of the first sleeve and an inner wall of the second sleeve. A cooling liquid flows through the first cavity and the second cavity.

Optionally, the cooling liquid is made of an insulation material.

Optionally, the connector comprises a connection terminal, and the electrical connection framework is electrically connected to the connection terminal by means of welding or crimping.

Optionally, the connection terminal is made of copper or copper alloy.

According to the invention, the electrical connection framework consists in one rigid solid conductor.

Optionally, the electrical connection framework is made of aluminum or aluminum alloy.

Optionally, a cross-sectional area of the electrical connection framework is 1.5 mm² to 240 mm².

Optionally, the first sleeve and the second sleeve are made of rigid materials.

Optionally, one of the first sleeve and the second sleeve which is made of conductive metal or conductive plastic cement.

Optionally, a transfer impedance of the conductive metal or the conductive plastic cement is less than 100 mΩ.

Optionally, the conductive plastic cement is a polymer material containing conductive particles, and the conductive particles are made of a material containing one or more selected from the group consisting of metal, conductive ceramics, a carbon-containing conductor, a solid electrolyte and a mixed conductor. The polymer material contains one or more selected from the group consisting of tetraphenyl ethylene, polyvinyl chloride, polyethylene, polyamide, polytetrafluoroethylene, tetrafluoroethylene/hexafluoropropylene copolymer, ethylene/tetrafluoroethylene copolymer, polypropylene, polyvinylidene fluoride, polyurethane, polyterephthalic acid, polyurethane elastomer, styrene block copolymer, perfluoroalkoxy alkane, chlorinated polyethylene, polyphenylene sulfide, polystyrene, cross-linked polyolefin, ethylene-propylene rubber, ethylene/vinyl acetate copolymer, chloroprene rubber, natural rubber, styrene butadiene rubber, nitrile rubber, silicone rubber, butadiene rubber, isoprene rubber, ethylene propylene rubber, butyl rubber, fluororubber, polyurethane rubber, polyacrylate rubber, chlorosulfonated polyethylene rubber, epichlorohydrin rubber, chlorinated polyethylene rubber, chlorosulfide rubber, styrene butadiene rubber, butadiene rubber, hydrogenated nitrile rubber, polysulfide rubber, crosslinked polyethylene, polycarbonate, polysulfone, polyphenyl ether, polyester, phenolic resin, urea formaldehyde, styrene-acrylonitrile copolymer, polymethacrylate, and polyoxymethylene resin.

Optionally, a material of the metal contains one or more selected from the group consisting of nickel, cadmium, zirconium, chromium, cobalt, manganese, aluminum, tin, titanium, zinc, copper, silver, gold, phosphorus, tellurium and beryllium.

Optionally, the carbon-containing conductor contains one or more selected from the group consisting of graphite silver, graphene silver, graphite powder, a carbon nanotube material and a graphene material.

Optionally, the second sleeve is made of conductive metal or conductive plastic cement, and the second sleeve is electrically connected to the shielding inner shell by means of crimping or welding.

Optionally, an impedance between the second sleeve and the shielding inner shell is less than 80 mΩ.

Optionally, the first sleeve is made of conductive metal or conductive plastic cement, and an end of the first sleeve is sleeved with a shielding device through which the first sleeve is electrically connected to the shielding inner shell.

Optionally, the shielding device is provided with at least one first through hole in an axial direction of the electrical connection framework.

Optionally, a sum of cross-sectional areas of the first through holes accounts for 5% to 90% of a cross-sectional area of the shielding device.

Optionally, the first cavity is internally provided with at least one first supporting ring, an inner wall of which is in contact with the outer periphery of the electrical connection framework, and an outer wall of which is in contact with the inner wall of the first sleeve.

Optionally, the first supporting ring is provided with at least one second through hole in an axial direction of the electrical connection framework.

Optionally, a sum of cross-sectional areas of the second through holes accounts for 5% to 90% of a cross-sectional area of the first cavity.

Optionally, the second cavity is internally provided with at least one second supporting ring, an inner wall of which is in contact with an outer periphery of the first sleeve, and an outer wall of which is in contact with the inner wall of the second sleeve.

Optionally, the second supporting ring is provided with at least one third through hole in an axial direction of the electrical connection framework.

Optionally, a sum of cross-sectional areas of the third through holes accounts for 5% to 90% of a cross-sectional area of the second cavity.

Optionally, the first cavity is internally provided with at least one first supporting ring, the second cavity is internally provided with at least one second supporting ring; and the electrical connection framework, the first sleeve and the second sleeve each have a bent portion, and the first supporting ring and the second supporting ring are at least disposed at two ends and a middle position of an arc-shaped portion of the bent portion, respectively.

Optionally, thicknesses of the first sleeve and the second sleeve account for 0.1% to 20% of an outer diameter of the electrical connection framework, respectively.

Optionally, a cross-sectional area difference between the first cavity and the second cavity is no more than 20%.

Optionally, the connector includes a first connector and a second connector which are connected to two ends of the electrical connection framework; the first connector is internally provided with a rotary cavity communicated with the first cavity and the second cavity, and the second connector is internally provided with an adapter cavity communicated with the first cavity; the second sleeve is provided with an inlet pipe, which is communicated with the second cavity and passes through an outer wall of the second connector to protrudes out of the second connector; and an outlet pipe communicated with the adapter cavity is disposed outside the second connector.

Optionally, an end of the second cavity is sealed.

Optionally, the connector comprises a first connector and a second connector which are connected to two ends of the electrical connection framework; the first connector is internally provided with a rotary cavity communicated with the first cavity and the second cavity, and the second connector is internally provided with an adapter cavity communicated with the second cavity; the first sleeve is provided with an inlet pipe, which is communicated with the first cavity and passes through an outer wall of the second connector to protrude out of the second connector; and an outlet pipe communicated with the adapter cavity is disposed outside the second connector.

Optionally, an end of the first cavity is sealed.

Optionally, a first sealing structure is disposed between the inlet pipe and the second connector and between the outlet pipe and the second connector.

Optionally, a second sealing structure is disposed between the connector and the second sleeve.

Optionally, a boiling point of the cooling liquid is greater than or equal to 100°C.

Optionally, the cooling liquid contains one or more selected from the group consisting of water, ethylene glycol, silicone oil, fluorinated liquid, castor oil, coconut oil, corn oil, cottonseed oil, linseed oil, olive oil, palmitic acid, peanut oil, grapeseed oil, rapeseed oil, safflower oil, sunflower oil, soybean oil, high oleic acid variants of various vegetable oils, decen-4-oic acid, decenoic acid, lauroleic acid, linderic acid, tetradecenoic acid, physeteric acid, tsuduic acid, palmitoleic acid, petroselic acid, oleic acid, octadecenoic acid, gondoic acid, cetoleic acid, erucic acid, nervonic acid, glycerin, transformer oil, axle oil, internal combustion engine oil and compressor oil.

Optionally, a cooling rate of the cooling liquid to the electrical connection framework is 0.04 K/s to 5 K/s.

Only outside the scope of the claimed invention a partial region of the electrical connection framework may be a flexible body.

Optionally, the electrical connection framework comprises at least one bent portion.

Optionally, one of the connectors is a charging cradle.

The present disclosure further provides a vehicle, including the above connector assembly having a liquid cooling function, a circulating pump and a cooling device; and the first cavity or the second cavity are communicated with the circulating pump and the cooling device.

Optionally, the inlet pipe is communicated with a liquid inlet of the circulating pump, a liquid outlet of the circulating pump is communicated with a liquid inlet of the cooling device, and a liquid outlet of the cooling device is communicated with the outlet pipe.

Certain further embodiments may exhibit the following effects:
1. The present disclosure solves the problem that the wire diameter of the high-voltage wire harness at present is large. The liquid cooling technology is used to reduce the heat generation amount of the electrical connection framework, so that the electrical connection framework can conduct a large current with a small wire diameter.
2. The present disclosure solves the problem that the automatic production and assembling cannot be realized due to the use of flexible cables for the high-voltage wire harnesses at present. The automatic fitting and assembling of the wire harness can be realized using the electrical connection framework which is at least partially rigid.
3. The present disclosure solves the problem of the low cooling efficiency of the liquid-cooled wire harness at present. The liquid-cooled wire harness is cooled through a liquid-cooled pipe at present, while in the present disclosure, the cooling liquid directly contacts the electrical connection framework, so that the temperature of the electrical connection framework can be quickly decreased, and a high current conduction can be realized.
4. The present disclosure solves the problem that the flexible cable contacts and rubs the vehicle shell, which cause the damage and short circuit of the insulation layer. The electrical connection framework can be arranged according to the shape of the vehicle body, while keeping a distance from the vehicle body to avoid rubbing the vehicle shell, thereby ensuring the service life of the electrical connection framework.
5. The connector is provided with a shielding inner shell, which can effectively prevent the electromagnetic interference generated by the terminal of the connector. The shielding inner shell made of conductive plastic can be integrally formed with the connector by means of integral injection molding, which saves the machining time, improves the production efficiency and reduces the production cost.
6. The electrical connection framework may include a bent portion, so that the structure of the connector assembly can be reasonably designed according to the mounting environment of the vehicle body, which makes the mounting of the connector assembly on the vehicle body easier and saves the assembling time.
7. The sealing ring can prevent the leakage of the cooling liquid at the joint, and support the cavity, so as to prevent the cavity from being squeezed and deformed under an external force and affecting the circulation of the cooling liquid.
8. The electrical connection framework is sleeved with a plurality of sleeves, which not only construct the cavity, but also serves as a shielding layer to effectively shield the electromagnetic interference generated by the electrification of the electrical connection framework.

Other features and advantages of the present disclosure will become clear from the following detailed description of the exemplary embodiments of the present disclosure made with reference to the drawings.

### BRIEF DESCRIPTION OF THE DRAWINGS

The drawings, which are incorporated in and constitute a part of the specification, illustrate the embodiments of the present disclosure and together with the description, serve to explain the principles of the present disclosure.
FIG. 1 illustrates a structural schematic diagram of a connector assembly having a liquid cooling function according to the present disclosure.
FIG. 2 illustrates a structural schematic diagram of an interior of a connector assembly having a liquid cooling function according to the present disclosure.
FIG. 3 illustrates a cross-sectional view of an electrical connection framework of a connector assembly having a liquid cooling function according to the present disclosure.
FIG. 4 illustrates a structural schematic diagram of a shielding inner shell of a connector assembly having a liquid cooling function according to an embodiment of the present disclosure.
FIG. 5 illustrates a schematic diagram of a connection mode of a shielding inner shell of a connector assembly having a liquid cooling function according to another embodiment of the present disclosure.
FIG. 6 illustrates a structural schematic diagram of a bent portion of a connector assembly having a liquid cooling function according to the present disclosure.
FIG. 7 illustrates a cross-sectional view taken along line A-A in FIG. 6.
FIG. 8 illustrates a structural schematic diagram of an inlet pipe of a connector assembly having a liquid cooling function according to the present disclosure.
FIG. 9 illustrates a structural schematic diagram of a rotary cavity of a connector assembly having a liquid cooling function according to the present disclosure.
FIG. 10 illustrates a structural schematic diagram of an adapter cavity of a connector assembly having a liquid cooling function according to the present disclosure.
FIG. 11 illustrates a structural schematic diagram of an inlet pipe and an outlet pipe of a connector assembly having a liquid cooling function according to an embodiment of the present disclosure.
FIG. 12 illustrates a schematic diagram of a connection mode of an inlet pipe and an outlet pipe of a connector assembly having a liquid cooling function according to another embodiment of the present disclosure.
FIG. 13 illustrates a schematic diagram of liquid inlet and liquid return of a connector assembly having a liquid cooling function according to an embodiment of the present disclosure.
FIG. 14 illustrates a schematic diagram of liquid inlet and liquid return mode of a connector assembly having a liquid cooling function according to another embodiment of the present disclosure.

### Reference numerals of the main components:

1-connector; 11-first connector; 12-second connector; 2-electrical connection framework; 3-connection terminal; 4-shielding inner shell; 5-first sleeve; 51-first cavity; 511-first supporting ring; 512-second through hole; 52-shielding device; 521-first through hole; 6-second sleeve; 61-second cavity; 611-second supporting ring; 612-third through hole; 7-second sealing structure; 81-rotary cavity; 82-adapter cavity; 83-inlet pipe; 84-outlet pipe; 9-circulating pump; 10-cooling device.

### DETAILED DESCRIPTION OF THE EMBODIMENTS

Various exemplary embodiments of the present disclosure will now be described in detail with reference to the drawings. It should be noted that the relative arrangements, the numerical expressions and the numerical values of components and steps set forth in these embodiments do not limit the scope of the present disclosure unless otherwise specified.

The following description of at least one exemplary embodiment is merely illustrative and is in no way intended to limit the present disclosure or the application or the use thereof.

Technologies, methods and devices known to those of ordinary skill in the art may not be discussed in detail, but they should be regarded as parts of the specification under appropriate circumstances.

In all examples illustrated and discussed here, any specific value should be interpreted as illustrative only rather than limiting. Thus, other examples of the exemplary embodiments may have different values.

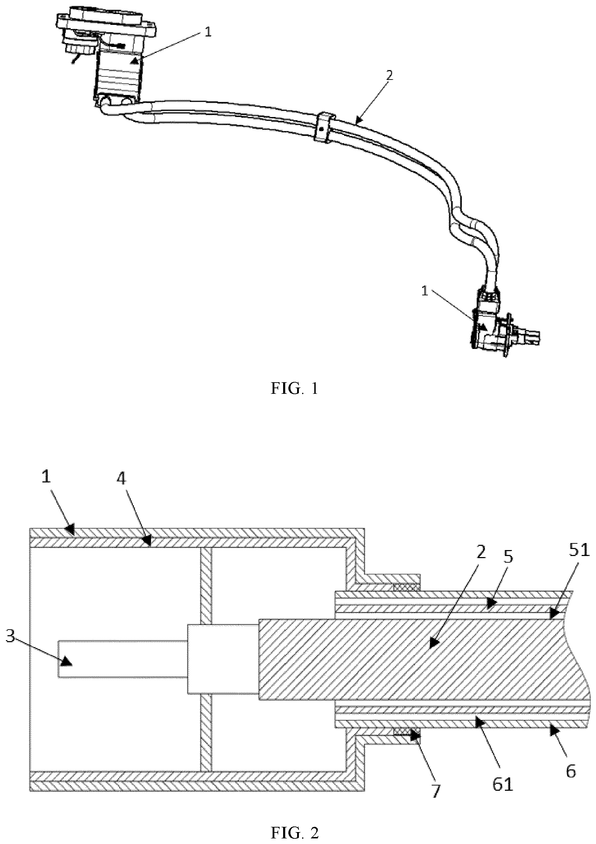

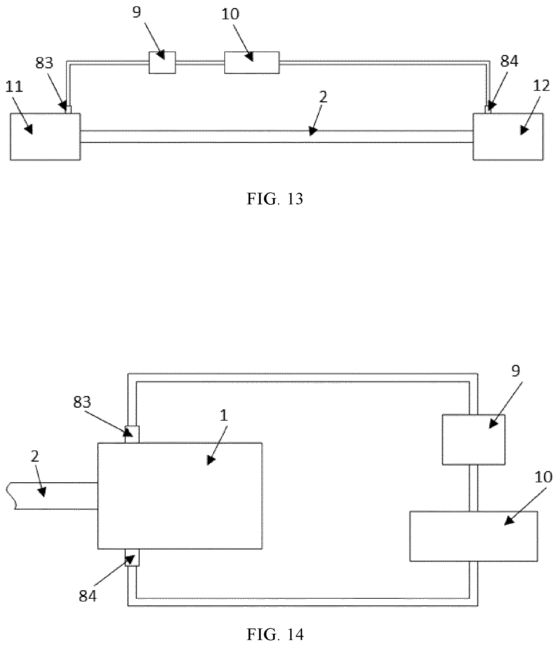

A connector 1 assembly having a liquid cooling function, as illustrated in FIGS. 1 to 14, includes at least one electrical connection framework 2 and connectors 1 connected to two ends of the electrical connection framework 2. An outer periphery of the electrical connection framework 2 is sequentially sleeved with a first sleeve 5 and a second sleeve 6. A first cavity 51 is formed between an outer wall of the electrical connection framework 2 and an inner wall of the first sleeve 5. A second cavity 61 is formed between an outer wall of the first sleeve 5 and an inner wall of the second sleeve 6. The first cavity 51 and the second cavity 61 have cooling liquid flowing therethrough.

At present, the charging cables on most of the connector assemblies use multi-core copper cables, which are heavy and expensive and become an obstacle to the popularization of new energy vehicles. In addition, although the multi-core cable is soft and can be easily machined and wired, the wire diameter is too large and the weight is heavy. During travelling of a vehicle, the cable will frequently rub a vehicle shell, thereby damaging the insulation layer of the cable and resulting in a high-voltage discharge, which will damage the vehicle or cause serious traffic accidents in severe cases. Thus, the multi-core cable structure may be replaced by the cable form of the electrical connection framework 2, such that the cable can be fixed on the vehicle shell, without rubbing the vehicle shell along with the vibration of the vehicle, thereby prolonging the service life of the connector assembly and reducing the accident rate. When the vehicle is charged, the current flowing through the electrical connection framework 2 is very large, leading to a rapid increase in the temperature of the electrical connection framework 2. By circulating the cooling liquid in the first cavity 51 and the second cavity 61, the electrical connection framework 2 can be cooled, thereby reducing the temperature of the electrical connection framework 2 which generates heat, and enabling the connector assembly to work at a safe temperature.

In some embodiments, the connector 1 includes a connection terminal 3, and the electrical connection framework 2 is electrically connected to the connection terminal 3 by means of welding or crimping. The connection terminal 3 and the electrical connection framework 2 are connected by welding. The welding modes, which include one or more selected from the group consisting of resistance welding, friction welding, ultrasonic welding, arc welding, laser welding, electron beam welding, pressure diffusion welding and magnetic induction welding, use the concentrated heat energy or pressure to achieve a fusion connection at the contact positions of the connection terminal 3 and the electrical connection framework 2, such that the connection by welding is stable.

In addition, the metal inertia of copper is greater than that of aluminum, and an electrode potential difference between copper and aluminum is 1.9997 V. An electrochemical reaction will occur when the two metals are connected and electrified, which will lead to a gradual oxidation of aluminum wires, reducing the mechanical strength and the electrical conductivity of aluminum wires. Dissimilar materials can be connected by welding, and the conductive effect is better since the contact positions are fused.

The resistance welding refers to a method of welding by passing strong current through a contact point that is between an electrode and a workpiece, to generate heat by a contact resistance.

The friction welding refers to a method of welding by using the heat generated by the friction between the contact surfaces of the workpieces as a heat source, to make the workpieces be plastically deformed under pressure.

The ultrasonic welding is to transmit high-frequency vibration waves to surfaces of two to-be-welded objects, so that the surfaces of the two objects rub against each other under pressure to form a fuse molecular layer.

The arc welding is to convert electric energy into heat energy and mechanical energy that are needed for welding by using electric arc as a heat source and using the physical phenomenon of air discharge, so as to connect metals. The arc welding mainly includes shielded metal arc welding, submerged arc welding and gas shielded welding, etc.

The laser welding is an efficient and precise welding method that uses a laser beam with high energy density as a heat source.

The friction welding refers to a method of welding by using the heat generated by the friction between the contact surfaces of the workpieces as a heat source, to make the workpieces be plastically deformed under pressure.

The electron beam welding method refers to a method of using accelerated and focused electron beam to bombard the welding surface that is placed in vacuum or non-vacuum, to melt the welded workpiece to achieve welding.

The pressure welding method is a method of applying pressure to weldments to make binding surfaces of them be in close contact and generate a certain plastic deformation to complete the welding.

The magnetic induction welding refers to that that two to-be-welded workpieces are instantaneously collided with each other at high speed under the action of a strong pulsed magnetic field, so that under the action of high pressure waves, the atoms of the two materials on the material surfaces of the two workpieces can meet within interatomic distance, thus forming a stable metallurgical bond at the interface. The magnetic induction welding is a type of solid-state cold welding that can weld conductive metals with similar or dissimilar properties.

In some embodiments, the cooling liquid is made of an insulation material, such as insulation oil which can quickly conduct the high temperature of the electrical connection framework 2 to the outside, so as to achieve the purpose of rapid cooling, while the electrical connection framework 2 and a protective shell are not electrically connected to each other so that they can realize the conductive functions of different loops.

According to the invention, the electrical connection framework 2 consists in one rigid solid conductor. That is, the electrical connection framework 2 is formed by one solid wire, and specifically may be made of copper or copper alloy or aluminum or aluminum alloy which has excellent electrical conductivity, so that the electrical connection framework 2 can be fixed on the vehicle shell without rubbing the vehicle shell along with the vibration of the vehicle, thereby prolonging the service life of the connector assembly and reducing the accident rate.

In some embodiments, a cross-sectional area of the electrical connection framework 2 is 1.5 mm² to 240 mm². The cross-sectional area of the electrical connection framework 2 determines the magnitude of the current that can be conducted by the electrical connection framework 2. Generally, the electrical connection framework 2 that realizes signal conduction has a small current and a small cross-sectional area. For example, a minimum cross-sectional area of the electrical connection framework 2 of the wires for signal transmission may be 1.5 mm². The electrical connection framework 2 that realizes power conduction has a large current and a large cross-sectional area. For example, a maximum cross-sectional area of a conductor of a vehicle battery wire harness may reach 240 mm².

In some embodiments, the first sleeve 5 and the second sleeve 6 are made of a rigid material. The rigid body refers to an object with a shape and a size unchanged during movement and under the action of a force, and the relative positions of internal points thereof also remained unchanged. In fact, an absolute rigid body is not existed, and it is just an ideal model, because any object is deformed more or less under the action of a force, and if the degree of deformation is extremely small relative to the geometric size of the object itself, the deformation may be ignored when studying the movement of the object. Therefore, the deformations of the first sleeve 5 and the second sleeve 6 made of the rigid material are negligible during the use, and the deformation decreases as the tensile strength of the rigid body increases.

In some embodiments, one of the first sleeve 5 and the second sleeve 6 is made of conductive metal or conductive plastic cement. The conductive plastic cement is conductive plastic or conductive rubber containing metal particles. The advantage of the conductive plastic cement is to facilitate the injection molding, and the user can select the first sleeve 5 or the second sleeve 6 made of a suitable material as needed.

In some embodiments, the connector 1 further includes a shielding inner shell 4 made of conductive metal or conductive plastic cement. As illustrated in FIG. 2, in order to reduce the influence of the electromagnetic interference, the conductive cable usually uses a shielding net to shield the electromagnetic interference. At present, the conventional shielding net is braided with metal wires, and a shielding braiding machine has to be added in the cable production equipment, such that the equipment price is high and a large area is occupied, resulting in a high price of the shielding cable of the connector 1. In the present disclosure, the shielding inner shell 4 made of a conductive material can serve as a shielding layer, which effectively shields the electromagnetic interference caused by the electrification of the electrical connection framework 2, thereby saving the use of the shielding net and reducing the cost of the connector assembly.

In some embodiments, the conductive metal or the conductive plastic cement has a transfer impedance less than 100 mΩ. The shielding material usually adopts the transfer impedance to represent the shielding effect of the shielding inner shell 4. The shielding effect gets better as the transfer impedance decreases. The transfer impedance of the shielding inner shell 4 is defined as a ratio of a differential mode voltage U induced by a shield per unit length to current I_{S} passing through a surface of the shield, that is: Z_{T}=U/I_{S}, so it can be understood that the transfer impedance of the shielding inner shell 4 converts the current thereof into a differential mode interference. The transfer impedance should be as small as possible, i.e., a better shielding performance can be obtained by reducing the conversion of the differential mode interference.

In order to verify the influence of different transfer impedances of the shielding inner shell 4 on the shielding effects, the inventor selects the electrical connection frameworks 2 with the same specification, the connectors 1 with the same specification and the connection terminals 3 with the same specification, and the shielding inner shells 4 with different transfer impedances to make a series of samples, so as to test the shielding effects respectively. The experimental results are shown in Table 1. In this embodiment, the shielding performance value greater than 40 dB is an ideal value.

The test method of the shielding performance value is to adopt a test instrument that outputs a signal value (which is a test value 2) to the electrical connection framework 2, and dispose a detection device which detects a signal value (which is a test value 1) outside the electrical connection framework 2. The shielding performance value = the test value 2 - the test value 1.

**Table 1: Influence of the transfer impedance of the shielding inner shell 4 on the shielding performance**

| Test parameter | Transfer impedance of the shielding inner shell 4 (mΩ) | | | | | | | | | | |
|---|---|---|---|---|---|---|---|---|---|---|---|
| | 20 | 30 | 40 | 50 | 60 | 70 | 80 | 90 | 100 | 110 | 120 |
| Shielding performance value (dB) | 79 | 76 | 71 | 67 | 63 | 58 | 53 | 46 | 43 | 30 | 26 |

As can be seen from Table 1, when the transfer impedance of the shielding inner shell 4 is greater than 100 mΩ, the shielding performance value of the shielding inner shell 4 is less than 40 dB, which does not meet the requirement of the ideal value. When the transfer impedance of the shielding inner shell 4 is less than 100 mΩ, all of the shielding performance values of the shielding inner shell 4 meet the requirement of the ideal value, and the trend is increasingly better. Therefore, the inventor sets the transfer impedance of the conductive metal or the conductive plastic cement to be less than 100 mΩ.

In some embodiments, the conductive plastic cement is a polymer material containing conductive particles, and the conductive particles are made of a material containing one or more selected from the group consisting of metal, conductive ceramics, a carbon-containing conductor, a solid electrolyte and a mixed conductor. The polymer material contains one or more selected from the group consisting of tetraphenyl ethylene, polyvinyl chloride, polyethylene, polyamide, polytetrafluoroethylene, tetrafluoroethylene/hexafluoropropylene copolymer, ethylene/tetrafluoroethylene copolymer, polypropylene, polyvinylidene fluorinated liquid, polyurethane, polyterephthalic acid, polyurethane elastomer, styrene block copolymer, perfluoroalkoxy alkane, chlorinated polyethylene, polyphenylene sulfide, polystyrene, cross-linked polyolefin, ethylene-propylene rubber, ethylene/vinyl acetate copolymer, chloroprene rubber, natural rubber, styrene butadiene rubber, nitrile rubber, silicone rubber, butadiene rubber, isoprene rubber, ethylene propylene rubber, butyl rubber, fluororubber, polyurethane rubber, polyacrylate rubber, chlorosulfonated polyethylene rubber, epichlorohydrin rubber, chlorinated polyethylene rubber, chlorosulfide rubber, styrene butadiene rubber, butadiene rubber, hydrogenated nitrile rubber, polysulfide rubber, crosslinked polyethylene, polycarbonate, polysulfone, polyphenyl ether, polyester, phenolic resin, urea formaldehyde, styrene-acrylonitrile copolymer, polymethacrylate, and polyoxymethylene resin.

In some embodiments, the material of the metal contains one or more selected from the group consisting of nickel, cadmium, zirconium, chromium, cobalt, manganese, aluminum, tin, titanium, zinc, copper, silver, gold, phosphorus, tellurium and beryllium. In order to verify the influence of different metal materials on the electrical conductivity of the shielding inner shell 4, the inventor makes samples of the shielding inner shell 4 with metal particles of the same size and different materials to test the electrical conductivities of the shielding inner shell 4, respectively. The experimental results are shown in Table 2. In this embodiment, the electrical conductivity of the shielding inner shell 4 greater than 99% is an ideal value.

**Table 2: Influence of metal particles with different materials on the electrical conductivity of the shielding inner shell 4**

| Metals of different materials | | | | | | | | | | | | | | | |
|---|---|---|---|---|---|---|---|---|---|---|---|---|---|---|---|
| Gol'd | Silver | Copper | Nickel | Titanium | Tin | Aluminum | Cadmium | Zirconium | Chromium | Cobalt | Manganese | Zinc | Tellurium | Bervllium | Palladium |
| Electrical conductivity of the shielding inner shell 4 (%) | | | | | | | | | | | | | | | |
| 99.8 | 99.9 | 99.8 | 99.5 | 99.5 | 99.5 | 99.6 | 99.3 | 99.2 | 99.2 | 99.4 | 99.5 | 99.3 | 99.4 | 99.4 | 99.2 |

As can be seen from Table 2, the electrical conductivities of the conductive plastic made of different selected metal particles are within the range of the ideal value. In addition, phosphorus is a non-metallic material and cannot be directly used as the material of the conductive plating layer, but it can be added to other metal to form an alloy to improve the conductive and mechanical properties of the metal itself. Therefore, the inventor sets that the metal particles are made of one or more selected from the group consisting of nickel, cadmium, zirconium, chromium, cobalt, manganese, aluminum, tin, titanium, zinc, copper, silver, gold, phosphorus, tellurium and beryllium.

In some embodiments, a carbon-containing conductor contains one or more selected from the group consisting of graphite silver, graphene silver, graphite powder, a carbon nanotube material and a graphene material. The graphite powder is a mineral powder with the main component of carbon, which is soft and dark gray and is a very good nonmetallic conductive substance. The carbon nanotube has good electrical conductivity, with a structure the same as the lamellar structure of graphite, so it has good electrical properties. Graphene has extremely high electrical properties. The carbon-containing conductor containing these three materials has high electrical conductivity and good shielding performance, which can well realize the electromagnetic shielding.

In some embodiments, the second sleeve 6 is made of conductive metal or conductive plastic cement, and is electrically connected to the shielding inner shell 4 by means of crimping or welding. As illustrated in FIG. 2, the second sleeve 6 is electrically connected to the shielding inner shell 4. The crimping is a production process in which the shielding inner shell 4 and the second sleeve 6 are assembled and then stamped into a whole using a crimping machine. The crimping has the advantage of mass production, and by adopting an automatic crimping machine, products with a stable quality can be rapidly manufactured in large quantities. The welding mode is substantially the same as that of the connection terminal 3 and the electrical connection framework 2, and will not be described in detail.

In some embodiments, an impedance between the second sleeve 6 and the shielding inner shell 4 is less than 80 mΩ. The impedance between the second sleeve 6 and the shielding inner shell 4 should be as small as possible, so that the current generated by the shielding inner shell 4 can flow back to an energy source or a grounding position without hindrance. If the impedance between the second sleeve 6 and the shielding inner shell 4 is large, a large current will be generated between the second sleeve 6 and the shielding inner shell 4, thereby generating a large radiation at the cable joint.

In order to verify the influence of the impedance between the second sleeve 6 and the shielding inner shell 4 on the shielding effects, the inventor selects the electrical connection frameworks 2 with the same specification, the connectors 1 with the same specification, the connection terminals 3 with the same specification, and different impedances between the second sleeve 6 and the shielding inner shell 4 to make a series of samples, so as to test the shielding effects respectively. The experimental results are shown in Table 5. In this embodiment, the shielding performance value greater than 40 dB is an ideal value

The test method of the shielding performance value is to adopt a test instrument that outputs a signal value (which is a test value 2) to the electrical connection framework 2, and dispose a detection device which detects a signal value (which is a test value 1) outside the electrical connection framework 2. The shielding performance value = the test value 2 - the test value 1.

**Table 3: Influence of the impedance between the second sleeve 6 and the shielding inner shell 4 on the shielding performance**

| Test parameter | Impedance between the second sleeve 6 and the shielding inner shell 4 (mΩ) | | | | | | | | | | |
|---|---|---|---|---|---|---|---|---|---|---|---|
| | 5 | 10 | 20 | 30 | 40 | 50 | 60 | 70 | 80 | 90 | 100 |
| Shielding performance value (dB) | 76 | 74 | 72 | 66 | 61 | 57 | 52 | 49 | 43 | 32 | 28 |

As can be seen from Table 3, when the impedance value between the second sleeve 6 and the shielding inner shell 4 is greater than 80 mΩ, the shielding performance value is less than 40 dB, which does not meet the requirement of the ideal value. However, when the impedance value between the second sleeve 6 and the shielding inner shell 4 is less than 80 mΩ, all of the shielding performance values meet the requirement of the ideal value, and the trend is increasingly better. Therefore, the inventor sets the impedance between the second sleeve 6 and the shielding inner shell 4 to be less than 80 mΩ.

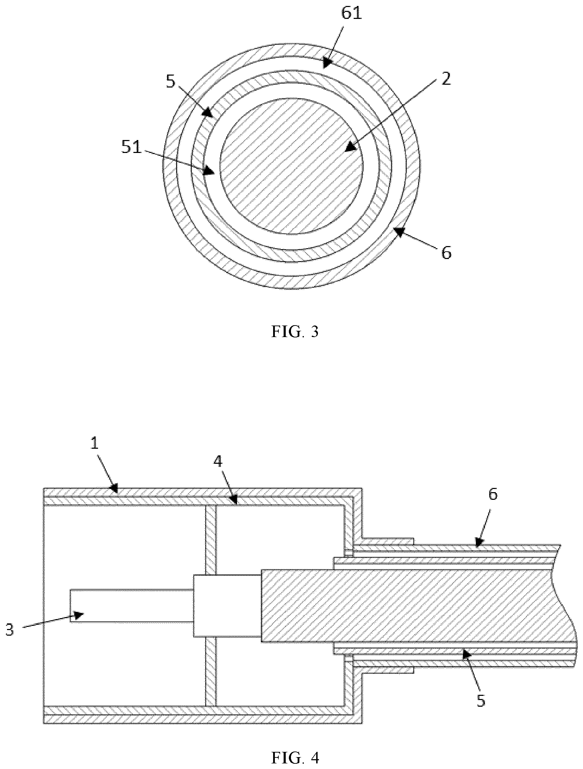

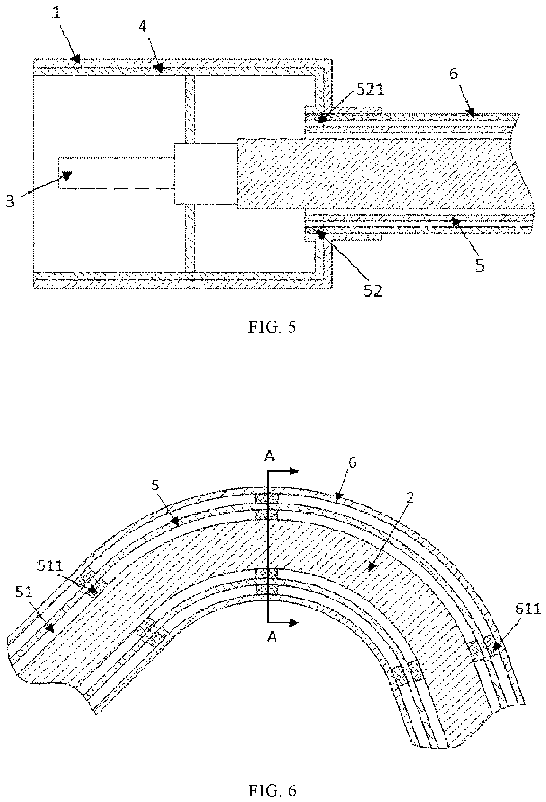

In some embodiments, the first sleeve 5 is made of conductive metal or conductive plastic cement, and an end of the first sleeve 5 is sleeved with a shielding device 52, through which the first sleeve 5 is electrically connected to the shielding inner shell 4. As illustrated in FIG. 4, the first sleeve 5 is directly electrically connected to the shielding inner shell 4. In this embodiment, as illustrated in FIG. 5, the first sleeve 5 is not directly electrically connected to the shielding inner shell 4, and instead, an end of the first sleeve 5 is sleeved with a shielding device 52, through which the first sleeve 5 is electrically connected to the shielding inner shell 4.

In some embodiments, the shielding device 52 is provided with at least one first through hole 521 in an axial direction of the electrical connection framework 2. In order to make the cooling liquid smoothly flow through the shielding device 52, the shielding device 52 is provided with at least one first through hole 521 in an axial direction of the electrical connection framework 2, so that the cooling liquid can smoothly pass through the shielding device 52 to obtain the cooling effect, as illustrated in FIG. 5.

In some embodiments, a sum of cross-sectional areas of the first through holes 521 accounts for 5% to 90% of a cross-sectional area of the shielding device 52. If the sum of the cross-sectional areas of the first through holes 521 is too large, the supporting force of the shielding device 52 will be insufficient, and if the sum of the cross-sectional areas of the first through holes 521 is too small, the cooling efficiency will be insufficient. In order to select a reasonable sum of the cross-sectional areas of the first through holes 521, the inventor carries out relevant tests. The experimental method is to select the same electrical connection frameworks 2 with the same shielding devices 52, dispose the first through holes 521 with different cross-sectional areas in the shielding device 52, apply a force of 80 N to observe whether the shielding device 52 is deformed, and it is unqualified if the shielding device 52 is deformed. In a closed environment, the same current is conducted to the electrical connection frameworks 2 with different first through holes 521, and a temperature rise less than 50K is a qualified value. The results are shown in Table 4.

**Table 4: Influence of the ratio of the sum of the cross-sectional areas of the first through holes 521 to the cross-sectional area of the shielding device 52 on the support to the shielding device 52 and the temperature rise of the electrical connection framework 2**

| Ratio of the sum of the cross-sectional areas of the first through holes 521 to the cross-sectional area of the shielding device (%) | | | | | | | | | | | | | | |
|---|---|---|---|---|---|---|---|---|---|---|---|---|---|---|
| 2 | 3 | 5 | 10 | 15 | 25 | 40 | 60 | 76 | 80 | 82 | 85 | 88 | 90 | 92 |

| Whether the shielding device 52 is deformed | | | | | | | | | | | | | | |
|---|---|---|---|---|---|---|---|---|---|---|---|---|---|---|
| No | No | No | No | No | No | No | No | No | No | No | No | No | No | Yes |

| Temperature rise of the electrical connection framework 2 (K) | | | | | | | | | | | | | | |
|---|---|---|---|---|---|---|---|---|---|---|---|---|---|---|
| 51.0 | 50.2 | 49.6 | 48.3 | 47.5 | 44 | 41.2 | 39.8 | 38.5 | 37.1 | 33.2 | 30.9 | 27.5 | 26.8 | 26.5 |

As can be seen from Table 4, when the ratio of the sum of the cross-sectional areas of the first through holes 521 to the cross-sectional area of the shielding device 52 is less than 5%, the temperature rise of the electrical connection framework 2 is greater than 50K, which is unqualified. When the ratio of the sum of the cross-sectional areas of the first through holes 521 to the cross-sectional area of the shielding device 52 is greater than 90%, the shielding device 52 will be deformed under the force of 80 N, which will easily lead to the decrease of the cooling rate or even the leakage of the cooling liquid. Therefore, the inventor prefers that the ratio of the sum of the cross-sectional areas of the first through holes 521 to the cross-sectional area of the shielding device 52 is 5% to 90%.

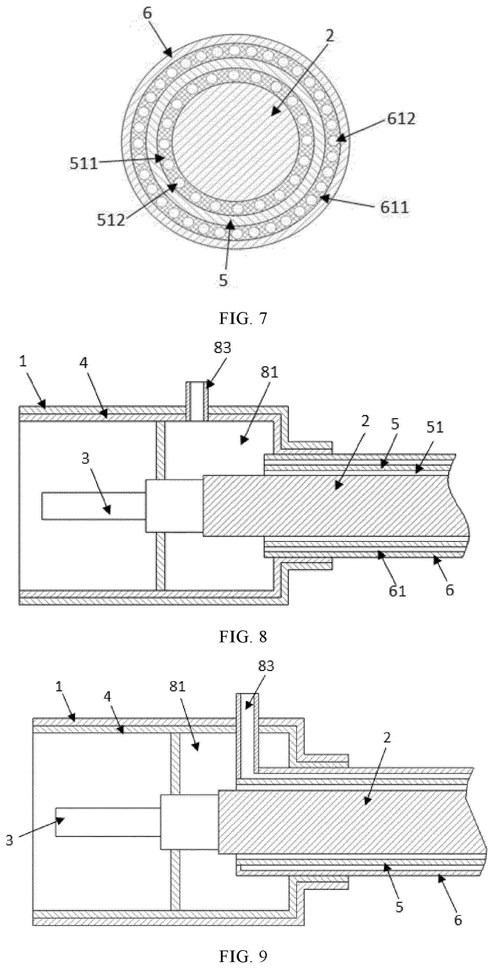

In some embodiments, the first cavity 51 is internally provided with at least one first supporting ring 511, an inner wall of which is in contact with the outer periphery of the electrical connection framework 2, and an outer wall of which is in contact with the inner wall of the first sleeve 5. As illustrated in FIGS. 6 and 7, the first supporting ring 511 can support the first cavity 51, prevent the first cavity 51 from being narrowed due to an external extrusion and causing the reduction of the cooling efficiency of the connector assembly, while avoiding short circuit caused by the contact between the electrical connection framework 2 and the first sleeve 5. A plurality of the first supporting rings 511 may be provided, and during machining, each of the first supporting rings 511 may be firstly fixed on the electrical connection framework 2, and then sleeved by the first sleeve 5 which is extruded so that the outer wall of the first supporting ring 511 is in contact with the inner wall of the first sleeve 5.

Further, the first supporting ring 511 is provided with at least one second through hole 512 in an axial direction of the electrical connection framework 2. As illustrated in FIG. 7, in order to prevent the cooling efficiency of the connector assembly from being decreased due to the blocking of the cooling liquid by the first supporting ring 511, the first supporting ring 511 is provided with at least one second through hole 512 in the axial direction of the electrical connection framework 2, so that the cooling liquid can smoothly pass through the first supporting ring 511 and obtain the cooling effect.

Further, a sum of cross-sectional areas of the second through holes 512 accounts for 5% to 90% of a cross-sectional area of the first cavity 51. If the sum of the cross-sectional areas of the second through holes 512 is too large, the supporting force of the first supporting ring 511 will be insufficient, and if the sum of the cross-sectional areas of the second through holes 512 is too small, the cooling efficiency will be insufficient. In order to select a reasonable sum of the cross-sectional areas of the second through holes 512, the inventor carries out relevant tests. The experimental method is to select the same electrical connection frameworks 2 with the same first cavities 51, dispose the first supporting rings 511 with different second through holes 512 in the first cavities 51, apply a force of 80 N to observe whether the first cavity 51 is deformed, and it is unqualified if the first cavity 51 is deformed. In a closed environment, the same current is conducted to the electrical connection frameworks 2 with different second through holes 512, and a temperature rise less than 50K is a qualified value. The results are shown in Table 5.

**Table 5: Influence of the ratio of the sum of the cross-sectional areas of the second through holes 512 to the cross-sectional area of the first cavity 51 on the support to the first cavity 51 and the temperature rise of the electrical connection framework 2**

| Ratio of the sum of the cross-sectional areas of the second through holes 512 to the cross-sectional area of the first cavity 51 (%) | | | | | | | | | | | | | | |
|---|---|---|---|---|---|---|---|---|---|---|---|---|---|---|
| 2 | 3 | 5 | 10 | 15 | 25 | 40 | 60 | 76 | 80 | 82 | 85 | 88 | 90 | 92 |

| Whether the first cavity 51 is deformed | | | | | | | | | | | | | | |
|---|---|---|---|---|---|---|---|---|---|---|---|---|---|---|
| No | No | No | No | No | No | No | No | No | No | No | No | No | No | Yes |

| Temperature rise of the electrical connection framework 2 (K) | | | | | | | | | | | | | | |
|---|---|---|---|---|---|---|---|---|---|---|---|---|---|---|
| 51.0 | 50.2 | 49.6 | 48.3 | 47.5 | 44 | 41.2 | 39.8 | 38.5 | 37.1 | 33.2 | 30.9 | 27.5 | 26.8 | 26.5 |

As can be seen from Table 5, when the ratio of the sum of the cross-sectional areas of the second through holes 512 to the cross-sectional area of the first cavity 51 is less than 5%, the temperature rise of the electrical connection framework 2 is greater than 50K, which is unqualified. When the ratio of the sum of the cross-sectional areas of the second through holes 512 to the cross-sectional area of the first cavity 51 is greater than 90%, the first cavity 51 will be deformed under the force of 80 N, which will easily lead to the decrease of the cooling rate or even the leakage of the cooling liquid. Therefore, the inventor prefers that the ratio of the sum of the cross-sectional areas of the second through holes 512 to the cross-sectional area of the first cavity 51 is 5% to 90%.

In some embodiments, as illustrated in FIG. 6, the second cavity 61 is internally provided with at least one second supporting ring 611, an inner wall of which is in contact with an outer periphery of the first sleeve 5, and an outer wall of which is in contact with the inner wall of the second sleeve 6. The second supporting ring 611 can support the second cavity 61, prevent the second cavity 61 from being narrowed due to an external extrusion and causing the reduction of the cooling efficiency of the connector assembly, while avoiding short circuit caused by the contact between the first sleeve 5 and the second sleeve 6. A plurality of the second supporting rings 611 may be provided, and during machining, the first sleeve 5 may be firstly fixed and then sleeved by the second sleeve 6 which is extruded so that the outer wall of the second supporting ring 611 is in contact with the inner wall of the second sleeve 6.

Further, the second supporting ring 611 is provided with at least one third through hole 612 in an axial direction of the electrical connection framework 2. As illustrated in FIG. 7, in order to prevent the cooling efficiency of the connector assembly from being decreased due to the blocking of the cooling liquid by the second supporting ring 611, the second supporting ring 611 is provided with at least one third through hole 612 in the axial direction of the electrical connection framework 2, so that the cooling liquid can smoothly pass through the second supporting ring 611 and obtain the cooling effect.

Further, a sum of cross-sectional areas of the third through holes 612 accounts for 5% to 90% of a cross-sectional area of the second cavity 61. If the sum of the cross-sectional areas of the third through holes 612 is too large, the supporting force of the second supporting ring 611 will be insufficient, and if the sum of the cross-sectional areas of the third through holes 612 is too small, the cooling efficiency will be insufficient. In order to select a reasonable sum of the cross-sectional areas of the third through holes 612, the inventor carries out relevant tests. The experimental method is the same as the method for verifying the ratio of the sum of the cross-sectional areas of the second through holes 512 to the cross-sectional area of the first cavity 51, and will not be repeated here. Therefore, the inventor prefers that the ratio of the sum of the cross-sectional areas of the third through holes 612 to the cross-sectional area of the second cavity 61 is 5% to 90%.

In some embodiments, the first cavity 51 is internally provided with at least one first supporting ring 511, and the second cavity 61 is internally provided with at least one second supporting ring 611; the electrical connection framework 2, the first sleeve 5 and the second sleeve 6 each have a bent portion, and the first supporting ring 511 and the second supporting ring 611 are at least disposed at two ends and a middle position of an arc-shaped portion of the bent portion, respectively. As illustrated in FIGS. 6 and 7, the first supporting ring 511 can support the first cavity 51 to prevent the first cavity 51 from being narrowed due to an external extrusion and causing the reduction of the cooling efficiency of the connector assembly, while avoiding short circuit caused by the contact between the electrical connection framework 2 and the first sleeve 5. A plurality of the first supporting rings 511 may be provided. The second supporting ring 611 can support the second cavity 61, and a plurality of the second supporting rings 611 may be provided. The arc shape formed at the bent position is easier to be extruded, so the first supporting ring 511 and the second supporting ring 611 disposed at the two ends and the middle position of the arc shape of the bent portion can achieve better supporting.

In some embodiments, the thickness of the first sleeve 5 and the thickness of the second sleeve 6 each accounts for 0.1% to 20% of an outer diameter of the electrical connection framework 2, respectively. If the thickness of the first sleeve 5 is too small, the electrical conductivity is insufficient and the shielding effect cannot meet the requirement. If the thickness of the first sleeve 5 is too large, the material will be wasted and the weight of the vehicle body will be increased. In order to verify the influence of different ratios of the thickness of the first sleeve 5 to the outer diameter of the electrical connection framework 2 on the electrical conductivity of the first sleeve 5, the inventor makes samples of the first sleeves 5 with different thicknesses and made of the same material, and tests the electrical conductivity respectively. The experimental results are shown in Table 6. In this embodiment, the electrical conductivity of the first sleeve 5 not less than 99% is an ideal value.

**Table 6: Influence of different ratios of the thickness of the first sleeve 5 to the outer diameter of the electrical connection framework 2 on the electrical conductivity**

| Ratios of different thicknesses of the first sleeve 5 to the outer diameter of the electrical connection framework 2 (%) | | | | | | | | | | | | | | |
|---|---|---|---|---|---|---|---|---|---|---|---|---|---|---|
| 0.03 | 0.05 | 0.1 | 0.5 | 1 | 3 | 5 | 8 | 10 | 13 | 15 | 18 | 19 | 20 | 22 |

| Electrical conductivity (%) | | | | | | | | | | | | | | |
|---|---|---|---|---|---|---|---|---|---|---|---|---|---|---|
| 98.7 | 98.9 | 99 | 99.1 | 99.1 | 99.2 | 99.2 | 99.3 | 99.3 | 99.4 | 99.5 | 99.6 | 99.7 | 99.8 | 99.8 |

As can be seen from Table 6, when the ratio of the thickness of the first sleeve 5 to the outer diameter of the electrical connection framework 2 is less than 0.1%, the electrical conductivity of the first sleeve 5 is less than 99%, which is unqualified. When the ratio of the thickness of the first sleeve 5 to the outer diameter of the electrical connection framework 2 is greater than 20%, the electrical conductivity has no significant increase, the shielding effect will not be further enhanced, and the thicker first sleeve 5 will increase the cost and the weight of the vehicle body. Therefore, the inventor prefers that the thickness of the ratio of the thickness of the first sleeve 5 to the outer diameter of the electrical connection framework 2 is 0.1% to 20%.

In some embodiments, a cross-sectional area difference between the first cavity 51 and the second cavity 61 is no more than 20%. In practical applications, the cross-sectional areas of the first cavity 51 and the second cavity 61 are the same or the area difference therebetween is less than 20%, which can ensure the consistent flux of the cooling liquid flowing through the first cavity 51 and the second cavity 61 and ensure the cooling efficiency.

In some embodiments, the connector 1 includes a first connector 11 and a second connector 12 which are connected to two ends of the electrical connection framework 2; the first connector 11 is internally provided with a rotary cavity 81 communicated with the first cavity 51 and the second cavity 61, and the second connector 12 is internally provided with an adapter cavity 82 communicated with the first cavity 51; the second sleeve 6 is provided with an inlet pipe 83, which is communicated with the second cavity 61 and passes through an outer wall of the second connector 12 to protrudes out of the second connector 12; and an outlet pipe 84 communicated with the adapter cavity 82 is disposed outside the second connector 12, as illustrated in FIG. 9.

Further, an end of the second cavity 61 is sealed. Under normal circumstances, the second cavity 61 is communicated with the adapter cavity 82. Therefore, when the second sleeve 6 is provided with the inlet pipe 83 to communicate with the second cavity 61, the end of the second cavity 61 needs to be sealed to isolate the communication between the second cavity 61 and the adapter cavity 82.

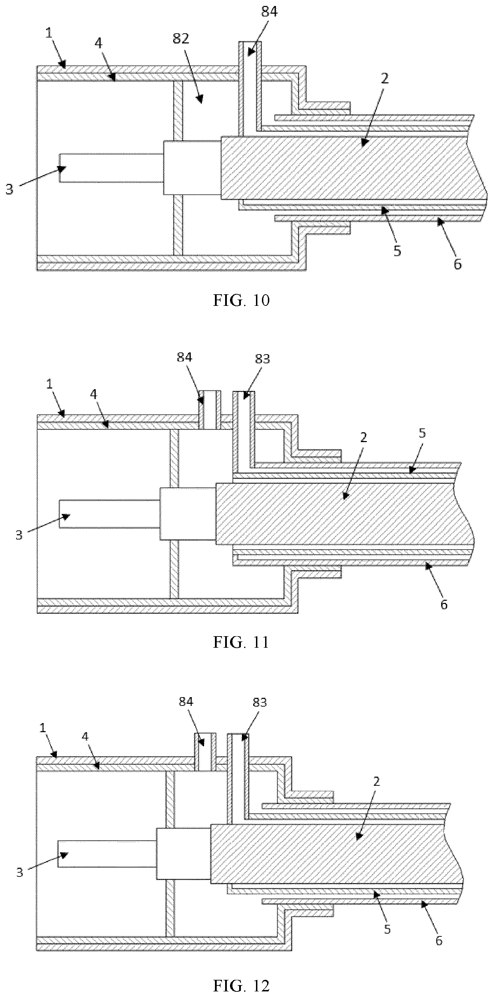

In some embodiments, the connector 1 includes a first connector 11 and a second connector 12 which are connected to two ends of the electrical connection framework 2; the first connector 11 is internally provided with a rotary cavity 81 communicated with the first cavity 51 and the second cavity 61, and the second connector 12 is internally provided with an adapter cavity 82 communicated with the second cavity 61; the first sleeve 5 is provided with an inlet pipe 83, which is communicated with the first cavity 51 and passes through an outer wall of the second connector 12 to protrude out of the second connector 12, and an outlet pipe 84 communicated with the adapter cavity 82 is disposed outside the second connector 12, as illustrated in FIG. 10.

Further, an end of the first cavity 51 is sealed. Under normal circumstances, the first cavity 51 is communicated with the adapter cavity 82. Therefore, when the first sleeve 5 is provided with the inlet pipe 83 to communicate with the first cavity 51, the end of the first cavity 51 needs to be sealed to isolate the communication between the first cavity 51 and the adapter cavity 82.

In some embodiments, a first sealing structure is disposed between the inlet pipe 83 and the second connector 12 and between the outlet pipe 84 and the second connector 12. By disposing the first sealing structure between the inlet pipe 83 and the second connector 12 and between the outlet pipe 84 and the second connector 12, the cooling liquid can be prevented from leaking from a joint between the inlet pipe 83 and the second connector 12 and a joint between the outlet pipe 84 and the second connector 12.

In some embodiments, a second sealing structure 7 is disposed between the connector 1 and the second sleeve 6. As illustrated in FIG. 2, the second sealing structure 7 can prevent cooling liquid from leaking from a joint between the connector 1 and the second sleeve 6.

In some embodiments, a boiling point of the cooling liquid is greater than or equal to 100°C. Different cooling liquids have different boiling points under the same external pressure due to their characteristics and compositions. At present, the boiling point of cooling liquid is greater than 100°C, so that the "boiling" phenomenon will not easily occur. Because once the cooling liquid reaches the boiling point, a lot of steam and bubbles will be generated and a part of the area of the cooling system will be occupied by the bubbles, which hinders the circulation of the cooling liquid and reduces the cooling efficiency. Therefore, the inventor prefers that the boiling point of the cooling liquid is greater than or equal to 100°C.

In some embodiments, the cooling liquid contains one or more selected from the group consisting of water, ethylene glycol, silicone oil, fluorinated liquid, castor oil, coconut oil, corn oil, cottonseed oil, linseed oil, olive oil, palmitic acid, peanut oil, grapeseed oil, rapeseed oil, safflower oil, sunflower oil, soybean oil, high oleic acid variants of various vegetable oils, decen-4-oic acid, decenoic acid, lauroleic acid, linderic acid, tetradecenoic acid, physeteric acid, tsuduic acid, palmitoleic acid, petroselic acid, oleic acid, octadecenoic acid, gondoic acid, cetoleic acid, erucic acid, nervonic acid, glycerin, transformer oil, axle oil, internal combustion engine oil and compressor oil. An additive may also be added into the cool liquid, and the additive is selected from one or more selected from the group consisting of an antioxidant, a pour point inhibitor, a corrosion inhibitor, an antibacterial agent and a viscosity modifier. The cooling liquid has the advantages of sensitive heat balance capability, super-strong heat conduction capability, super-wide working temperature range, no boiling or the like.

In some embodiments, a cooling rate of the cooling liquid to the electrical connection framework 2 is 0.04 K/s to 5 K/s. In order to verify the influence of the cooling rate of the cooling liquid on the temperature rise of the electrical connection framework 2, the inventor selects ten electrical connection frameworks 2 with the same cross-sectional area, the same material and the same length and conducts the same current thereto, cools the electrical connection frameworks 2 with the cooling liquid of different cooling rates, reads and records the temperature rise of each of the electrical connection frameworks 2 in Table 7.

The experimental method is to conduct the same current, in a closed environment, to each of the electrical connection frameworks 2 which adopts the cooling liquid of different cooling rates, record a temperature before the current conduction and a stable temperature after the current conduction, and take an absolute value of a difference therebetween. In this embodiment, a temperature rise less than 50 K is a qualified value.

**Table 7: Influence of different cooling rates of the cooling liquid on the temperature rise of the electrical connection framework 2**

| Cooling rate of the cooling structure (K/min) | | | | | | | | | | | | |
|---|---|---|---|---|---|---|---|---|---|---|---|---|
| 0.01 | 0.03 | 0.04 | 0.1 | 0.3 | 0.5 | 1 | 2 | 3 | 4 | 5 | 6 | 7 |

| Temperature rise of the electrical connection framework 2 (K) | | | | | | | | | | | | |
|---|---|---|---|---|---|---|---|---|---|---|---|---|
| 63.0 | 54.5 | 49.9 | 47.7 | 46.1 | 45.5 | 41.4 | 37.7 | 33.3 | 30.9 | 27.5 | 27.5 | 27.4 |

As can be seen from Table 7, when the cooling rate of the cooling structure is less than 0.04 K/s, the temperature rise of the electrical connection framework 2 is unqualified, and the temperature rise of the electrical connection framework 2 decreases as the cooling rate of the cooling structure increases. However, when the cooling rate of the cooling liquid is greater than 5 K/s, the temperature rise of the electrical connection framework 2 is not obviously decreased, and a higher cooling rate means a higher price and a more complicated process, so the inventor sets the cooling rate of the cooling structure as 0.04 K/s to 5 K/s.

In variants outside the scope of the claimed invention, a partial region of the electrical connection framework 2 may be a flexible body. The flexible body may facilitate that the electrical connection framework 2 can be bent at a large angle, so as to be conveniently disposed in the vehicle body with a large corner.

In some embodiments, the electrical connection framework 2 includes at least one bent portion, so that the electrical connection framework 2 can be arranged in the vehicle body more conveniently.

In some embodiments, one of the connectors 1 is a charging cradle. As new energy vehicles are increasingly popular, equipment and facilities for charging new energy vehicles are also developed. In order to meet the requirement of fast charging of rechargeable batteries on the new energy vehicles, a charging cradle assembly is needed. In the present disclosure, one of the connectors is a charging cradle, which is connected to a charging gun, and a connector at the other end is a high-voltage connector, which is connected to the rechargeable battery to achieve the purpose of charging the rechargeable battery.

The present disclosure further provides an electric vehicle, which includes the above connector assembly having a liquid cooling function, a circulating pump 9 and a cooling device 10. The first cavity 51 and the second cavity 61 are communicated with the circulating pump 9 and the cooling device 10. The circulating pump 9 feeds a cooling medium into the first cavity 51 to cool the electrical connection framework 2, and the cooling medium flows out of the electrical connection framework 2 through the second cavity 61. At this time, the temperature of the cooling medium is already high. After entering the cooling system, the cooling medium has its temperature decreased and is fed into a cooling cavity by the circulating pump 9 again to form a complete cooling cycle.

Further, the inlet pipe 83 is communicated with a liquid inlet of the circulating pump 9, a liquid outlet of the circulating pump 9 is communicated with a liquid inlet of the cooling device 10, and a liquid outlet of the cooling device 10 is communicated with the outlet pipe 84.

Although some specific embodiments of the present disclosure have been described in detail by examples, it should be understood by those skilled in the art that the above examples are only for illustration rather than limiting the scope of the present disclosure. The scope of the present disclosure is defined by the appended claims.

## Claims

1. A connector assembly having a liquid cooling function for use in an electric vehicle, comprising at least one electrical connection framework (2) and connectors (1) connected to two ends of the electrical connection framework (2), wherein an outer periphery of the electrical connection framework (2) is sequentially sleeved with a first sleeve (5) and a second sleeve (6), a first cavity (51) is formed between an outer wall of the electrical connection framework (2) and an inner wall of the first sleeve (5), a second cavity (61) is formed between an outer wall of the first sleeve (5) and an inner wall of the second sleeve (6), and a cooling liquid flows through the first cavity (51) and the second cavity (61);
**characterized in that** the electrical connection framework (2) consists in one rigid solid conductor.

2. The connector assembly having a liquid cooling function according to claim 1, wherein the connector (1) comprises a connection terminal (3), and the electrical connection framework (2) is electrically connected to the connection terminal (3) by means of welding or crimping.

3. The connector assembly having a liquid cooling function according to claim 1, wherein
the electrical connection framework (2) comprises at least one bent portion.

4. The connector assembly having a liquid cooling function according to claim 1, wherein the first sleeve (5) and the second sleeve (6) are made of rigid materials; preferably wherein
one of the first sleeve (5) and the second sleeve (6) is made of conductive metal or conductive plastic cement.

5. The connector assembly having a liquid cooling function according to claim 2, wherein wherein at least one of the connectors (1) further comprises a shielding inner shell (4) for shielding against electromagnetic interference generated by the terminal of the connector, and the shielding inner shell (4) is made of conductive metal or conductive plastic cement.

6. The connector assembly having a liquid cooling function according to claim 5, wherein the second sleeve (6) is made of conductive metal or conductive plastic cement, and the second sleeve (6) is electrically connected to the shielding inner shell (4) by means of crimping or welding; preferably wherein
an impedance between the second sleeve (6) and the shielding inner shell (4) is less than 80 mΩ.

7. The connector assembly having a liquid cooling function according to claim 5, wherein the first sleeve (5) is made of conductive metal or conductive plastic cement, an end of the first sleeve (5) is sleeved with a shielding device (52), and the first sleeve (5) is electrically connected to the shielding inner shell (4) through the shielding device (52); preferably wherein
the shielding device (52) is provided with at least one first through hole (521) in an axial direction of the electrical connection framework (2).

8. The connector assembly having a liquid cooling function according to claim 1, wherein the first cavity (51) is internally provided with at least one first supporting ring (511), an inner wall of which is in contact with the outer periphery of the electrical connection framework (2), and an outer wall of which is in contact with the inner wall of the first sleeve (5);
the first supporting ring (511) is provided with at least one second through hole (512) in an axial direction of the electrical connection framework (2).

9. The connector assembly having a liquid cooling function according to claim 1, wherein the second cavity (61) is internally provided with at least one second supporting ring (611), an inner wall of which is in contact with an outer periphery of the first sleeve (5), and an outer wall of which is in contact with the inner wall of the second sleeve (6);
the second supporting ring (611) is provided with at least one third through hole (612) in an axial direction of the electrical connection framework (2).

10. The connector assembly having a liquid cooling function according to claim 1, wherein the first cavity (51) is internally provided with at least one first supporting ring (511), the second cavity (61) is internally provided with at least one second supporting ring (611); and
the electrical connection framework (2), the first sleeve (5) and the second sleeve (6) each have a bent portion, and the first supporting ring (511) and the second supporting ring (611) are at least disposed at two ends and a middle position of an arc-shaped portion of the bent portion, respectively;
wherein the first supporting ring (511) is provided with at least one second through hole (512) in an axial direction of the electrical connection framework (2), and the second supporting ring (611) is provided with at least one third through hole (612) in an axial direction of the electrical connection framework (2).

11. The connector assembly having a liquid cooling function according to claim 1, wherein the plurality of connectors comprises a first connector (11) and a second connector (12) which are connected to two ends of the electrical connection framework (2); the first connector (11) is internally provided with a rotary cavity (81) communicated with the first cavity (51) and the second cavity (61), and the second connector (12) is internally provided with an adapter cavity (82) communicated with the first cavity (51); the second sleeve (6) is provided with an inlet pipe (83), which is communicated with the second cavity (61) and passes through an outer wall of the second connector (12) to protrudes out of the second connector (12); and an outlet pipe (84) communicated with the adapter cavity (82) is disposed outside the second connector (12); or
the the plurality of connectors comprises a first connector (11) and a second connector (12) which are connected to two ends of the electrical connection framework (2); the first connector (11) is internally provided with a rotary cavity (81) communicated with the first cavity (51) and the second cavity (61), and the second connector (12) is internally provided with an adapter cavity (82) communicated with the second cavity (61); the first sleeve (5) is provided with an inlet pipe (83), which is communicated with the first cavity (51) and passes through an outer wall of the second connector (12) to protrude out of the second connector (12); and an outlet pipe (84) communicated with the adapter cavity (82) is disposed outside the second connector (12).

12. The connector assembly having a liquid cooling function according to claim 11, wherein a first sealing structure is disposed between the inlet pipe (83) and the second connector (12) and between the outlet pipe (84) and the second connector (12); or
a second sealing structure (7) is disposed between at least one of the plurality of connectors (1) and the second sleeve (6).

13. A vehicle, comprising the connector assembly having a liquid cooling function according to any one of claims 1 to 12, a circulating pump (9) and a cooling device (10), wherein the first cavity (51) or the second cavity (61) is communicated with the circulating pump (9) and the cooling device (10).

14. The vehicle according to claim 13, wherein an inlet pipe (83) of the connector assembly having a liquid cooling function is communicated with a liquid inlet of the circulating pump (9), a liquid outlet of the circulating pump (9) is communicated with a liquid inlet of the cooling device (10), and a liquid outlet of the cooling device (10) is communicated with an outlet pipe (84) of the connector assembly having a liquid cooling function.

## Patentansprüche

1. Verbinderanordnung mit einer Flüssigkeitskühlfunktion zur Verwendung in einem Elektrofahrzeug, aufweisend mindestens ein elektrisches Verbindungsgerüst (2) und Verbinder (1), die mit zwei Enden des elektrischen Verbindungsgerüsts (2) verbunden sind, wobei ein Außenumfang des elektrischen Verbindungsgerüsts (2) nacheinander mit einer ersten Hülse (5) und einer zweiten Hülse (6) ummantelt ist, wobei zwischen einer Außenwand des elektrischen Verbindungsgerüsts (2) und einer Innenwand der ersten Hülse (5) ein erster Hohlraum (51) ausgebildet ist, zwischen einer Außenwand der ersten Hülse (5) und einer Innenwand der zweiten Hülse (6) ein zweiter Hohlraum (61) ausgebildet ist und eine Kühlflüssigkeit durch den ersten Hohlraum (51) und den zweiten Hohlraum (61) fließt;
**dadurch gekennzeichnet, dass** das elektrische Verbindungsgerüst (2) aus einem starren, massiven Leiter besteht.

2. Verbinderanordnung mit einer Flüssigkeitskühlfunktion nach Anspruch 1, bei der der Verbinder (1) einen Anschluss (3) aufweist und das elektrische Verbindungsgerüst (2) mittels Schweißen oder Crimpen elektrisch mit dem Anschluss (3) verbunden ist.

3. Verbinderanordnung mit Flüssigkeitskühlfunktion nach Anspruch 1, bei der das elektrische Verbindungsgerüst (2) mindestens einen gebogenen Abschnitt aufweist.

4. Verbinderanordnung mit Flüssigkeitskühlfunktion nach Anspruch 1, bei der die erste Hülse (5) und die zweite Hülse (6) aus starren Materialien bestehen; vorzugsweise bei der entweder die erste Hülse (5) oder die zweite Hülse (6) aus leitfähigem Metall oder leitfähigem Kunststoffzement besteht.

5. Verbinderanordnung mit Flüssigkeitskühlfunktion nach Anspruch 2, bei der mindestens einer der Verbinder (1) des Weiteren eine abschirmende Innenhülle (4) zum Schutz vor elektromagnetischen Störungen aufweist, die durch den Anschluss des Verbinders erzeugt werden, und die abschirmende Innenhülle (4) aus leitfähigem Metall oder leitfähigem Kunststoffzement besteht.

6. Verbinderanordnung mit einer Flüssigkeitskühlfunktion nach Anspruch 5, bei der die zweite Hülse (6) aus leitfähigem Metall oder leitfähigem Kunststoffzement besteht und die zweite Hülse (6) mittels Crimpen oder Schweißen elektrisch mit der abschirmenden Innenhülle (4) verbunden ist; vorzugsweise bei der die Impedanz zwischen der zweiten Hülse (6) und der abschirmenden Innenhülle (4) weniger als 80 mΩ beträgt.

7. Verbinderanordnung mit einer Flüssigkeitskühlfunktion nach Anspruch 5, bei der die erste Hülse (5) aus leitfähigem Metall oder leitfähigem Kunststoffzement besteht, ein Ende der ersten Hülse (5) mit einer Abschirmvorrichtung (52) ummantelt ist und die erste Hülse (5) über die Abschirmvorrichtung (52) elektrisch mit der abschirmenden Innenhülle (4) verbunden ist; vorzugsweise bei der die Abschirmvorrichtung (52) mit mindestens einem ersten Durchgangsloch (521) in axialer Richtung des elektrischen Verbindungsgerüsts (2) versehen ist.

8. Verbinderanordnung mit einer Flüssigkeitskühlfunktion nach Anspruch 1, bei der der erste Hohlraum (51) im Inneren mit mindestens einem ersten Stützring (511) versehen ist, dessen Innenwand mit dem Außenumfang des elektrischen Verbindungsgerüsts (2) in Kontakt steht und dessen Außenwand mit der Innenwand der ersten Hülse (5) in Kontakt steht; wobei der erste Stützring (511) mit mindestens einem zweiten Durchgangsloch (512) in axialer Richtung des elektrischen Verbindungsgerüsts (2) versehen ist.

9. Verbinderanordnung mit einer Flüssigkeitskühlfunktion nach Anspruch 1, bei der der zweite Hohlraum (61) im Inneren mit mindestens einem zweiten Stützring (611) versehen ist, dessen Innenwand mit einem Außenumfang der ersten Hülse (5) in Kontakt steht und dessen Außenwand mit der Innenwand der zweiten Hülse (6) in Kontakt steht;
wobei der zweite Stützring (611) mit mindestens einem dritten Durchgangsloch (612) in axialer Richtung des elektrischen Verbindungsgerüsts (2) versehen ist.

10. Verbinderanordnung mit einer Flüssigkeitskühlfunktion nach Anspruch 1, bei der der erste Hohlraum (51) innen mit mindestens einem ersten Stützring (511) versehen ist, der zweite Hohlraum (61) innen mit mindestens einem zweiten Stützring (611) versehen ist; und
das elektrische Verbindungsgerüst (2), die erste Hülse (5) und die zweite Hülse (6) jeweils einen gebogenen Abschnitt aufweisen und der erste Stützring (511) sowie der zweite Stützring (611) jeweils an mindestens zwei Enden und einer mittleren Position eines bogenförmigen Abschnitts des gebogenen Abschnitts angeordnet sind;
wobei der erste Stützring (511) mit mindestens einem zweiten Durchgangsloch (512) in axialer Richtung des elektrischen Verbindungsgerüsts (2) versehen ist und der zweite Stützring (611) mit mindestens einem dritten Durchgangsloch (612) in axialer Richtung des elektrischen Verbindungsgerüsts (2) versehen ist.

11. Verbinderanordnung mit einer Flüssigkeitskühlfunktion nach Anspruch 1, bei der die mehreren Verbinder einen ersten Verbinder (11) und einen zweiten Verbinder (12) aufweisen, die mit den beiden Enden des elektrischen Verbindungsgerüsts (2) verbunden sind; der erste Verbinder (11) im Inneren mit einem Drehhohlraum (81) versehen ist, der mit dem ersten Hohlraum (51) und dem zweiten Hohlraum (61) in Verbindung steht, und der zweite Verbinder (12) im Inneren mit einem Adapterhohlraum (82) versehen ist, der mit dem ersten Hohlraum (51) in Verbindung steht; die zweite Hülse (6) mit einem Einlassrohr (83) versehen ist, das mit dem zweiten Hohlraum (61) in Verbindung steht und durch eine Außenwand des zweiten Verbinders (12) verläuft, so dass es aus dem zweiten Verbinder (12) herausragt; und wobei ein Auslassrohr (84), das mit dem Adapterhohlraum (82) in Verbindung steht, außerhalb des zweiten Verbinders (12) angeordnet ist; oder
bei der die mehreren Verbinder einen ersten Verbinder (11) und einen zweiten Verbinder (12) aufweisen, die mit zwei Enden des elektrischen Verbindungsgerüsts (2) verbunden sind; der erste Verbinder (11) im Inneren mit einem Drehhohlraum (81) versehen ist, der mit dem ersten Hohlraum (51) und dem zweiten Hohlraum (61) in Verbindung steht, und der zweite Verbinder (12) im Inneren mit einem Adapterhohlraum (82) versehen ist, der mit dem zweiten Hohlraum (61) in Verbindung steht; die erste Hülse (5) mit einem Einlassrohr (83) versehen ist, das mit dem ersten Hohlraum (51) in Verbindung steht und durch eine Außenwand des zweiten Verbinders (12) verläuft, um aus dem zweiten Verbinder (12) herauszuragen; und wobei ein Auslassrohr (84), das mit dem Adapterhohlraum (82) in Verbindung steht, außerhalb des zweiten Verbinders (12) angeordnet ist.

12. Verbinderanordnung mit einer Flüssigkeitskühlfunktion nach Anspruch 11, bei der eine erste Dichtungsstruktur zwischen dem Einlassrohr (83) und dem zweiten Verbinder (12) sowie zwischen dem Auslassrohr (84) und dem zweiten Verbinder (12) angeordnet ist; oder
bei der eine zweite Dichtungsstruktur (7) zwischen mindestens einem der mehreren Verbinder (1) und der zweiten Hülse (6) angeordnet ist.

13. Fahrzeug, aufweisend die Verbinderanordnung mit einer Flüssigkeitskühlfunktion nach einem der Ansprüche 1 bis 12, eine Umwälzpumpe (9) und eine Kühlvorrichtung (10), wobei der erste Hohlraum (51) oder der zweite Hohlraum (61) mit der Umwälzpumpe (9) und der Kühlvorrichtung (10) in Verbindung steht.

14. Fahrzeug nach Anspruch 13, bei dem eine Einlassleitung (83) der Verbinderanordnung mit Flüssigkeitskühlfunktion mit einem Flüssigkeitseinlass der Umwälzpumpe (9) verbunden ist, ein Flüssigkeitsauslass der Umwälzpumpe (9) mit einem Flüssigkeitseinlass der Kühleinrichtung (10) verbunden ist und ein Flüssigkeitsauslass der Kühleinrichtung (10) mit einer Auslassleitung (84) der Verbinderanordnung mit Flüssigkeitskühlfunktion verbunden ist.

## Revendications

1. Ensemble connecteur ayant une fonction de refroidissement de liquide destiné à être utilisé dans un véhicule électrique, comprenant au moins une structure de connexion électrique (2) et des connecteurs (1), qui sont reliés aux deux extrémités de la structure de connexion électrique (2), la périphérie extérieure de la structure de connexion électrique (2) étant recouverte successivement d'un premier manchon (5) et d'un deuxième manchon (6), une première cavité (51) étant formé entre une paroi extérieure de la structure de connexion électrique (2) et une paroi intérieure du premier manchon (5), une deuxième cavité (61) est formée entre une paroi extérieure de la première manchon (5) et une paroi intérieure de la deuxième manchon (6), et un liquide de refroidissement circule à travers la première cavité (51) et la deuxième cavité (61); **caractérisé en ce que** la structure de connexion électrique (2) est constituée d'un conducteur rigide et massif.

2. Ensemble connecteur ayant une fonction de refroidissement de liquide selon la revendication 1, dans lequel le connecteur (1) comporte une borne (3) et la structure de connexion électrique (2) est reliée électriquement à la borne (3) par soudage ou sertissage.

3. Ensemble connecteur ayant une fonction de refroidissement de liquide selon la revendication 1, dans lequel la structure de connexion électrique (2) comporte au moins une partie courbée.

4. Ensemble connecteur ayant une fonction de refroidissement de liquide selon la revendication 1, dans lequel la première manchon (5) et la deuxième manchon (6) sont constituées de matériaux rigides; de préférence, dans lequel
soit la première manchon (5), soit la deuxième manchon (6) est constituée de métal conducteur ou de ciment plastique conducteur.

5. Ensemble connecteur ayant une fonction de refroidissement de liquide selon la revendication 2, dans lequel au moins l'un des connecteurs (1) comporte en outre une gaine interne de blindage (4) destinée à protéger contre les perturbations électromagnétiques générées par le raccordement du connecteur, et la gaine interne de blindage (4) est constituée de métal conducteur ou de ciment plastique conducteur.

6. Ensemble connecteur ayant une fonction de refroidissement de liquide selon la revendication 5, dans lequel la deuxième manchon (6) est constituée de métal conducteur ou de ciment plastique conducteur et la deuxième manchon (6) est reliée électriquement à la gaine intérieure de blindage (4) par sertissage ou soudage; de préférence dans lequel l'impédance entre la deuxième manchon (6) et la gaine intérieure de blindage (4) est inférieure à 80 mΩ.

7. Ensemble connecteur ayant une fonction de refroidissement de liquide selon la revendication 5, dans lequel la première manchon (5) est constituée de métal conducteur ou de ciment plastique conducteur, une extrémité de la première manchon (5) est recouverte d'un dispositif de blindage (52) et la première manchon (5) est reliée électriquement à la gaine intérieure de blindage (4) par l'intermédiaire du dispositif de blindage (52); de préférence, le dispositif de blindage (52) est muni d'au moins un premier trou traversant (521) dans la direction axiale de la structure de connexion électrique (2).

8. Ensemble de connexion ayant une fonction de refroidissement de liquide selon la revendication 1, dans lequel la première cavité (51) est pourvue, à l'intérieur, d'au moins une première bague d'appui (511) dont la paroi intérieure est en contact avec la périphérie extérieure de la structure de connexion électrique (2) et dont la paroi extérieure est en contact avec la paroi intérieure de la première manchon (5); la première bague d'appui (511) étant pourvue d'au moins un deuxième trou traversant (512) dans la direction axiale de la structure de connexion électrique (2).

9. Ensemble connecteur ayant une fonction de refroidissement de liquide selon la revendication 1, dans lequel la deuxième cavité (61) est pourvue à l'intérieur d'au moins une deuxième bague d'appui (611) dont la paroi intérieure est en contact avec une périphérie extérieure du premier manchon (5) et dont la paroi extérieure est en contact avec la paroi intérieure du deuxième manchon (6);
le deuxième bague d'appui (611) étant muni d'au moins un troisième trou traversant (612) dans la direction axiale de la structure de connexion électrique (2).

10. Ensemble connecteur ayant une fonction de refroidissement de liquide selon la revendication 1, dans lequel la première cavité (51) est pourvue à l'intérieur d'au moins une première bague d'appui (511), la deuxième cavité (61) est pourvue à l'intérieur d'au moins une deuxième bague d'appui (611); et
la structure de connexion électrique (2), le premier manchon (5) et le deuxième manchon (6) présentent chacun une partie courbée, et la première bague d'appui (511) ainsi que la deuxième bague d'appui (611) sont disposées respectivement à au moins deux extrémités et en une position centrale d'une partie en arc de la partie courbée;
le premier bague d'appui (511) étant muni d'au moins un deuxième trou traversant (512) dans la direction axiale de la structure de connexion électrique (2) et le deuxième bague d'appui (611) étant muni d'au moins un troisième trou traversant (612) dans la direction axiale de la structure de connexion électrique (2).

11. Ensemble connecteur ayant une fonction de refroidissement de liquide selon la revendication 1, dans lequel lesdits plusieurs connecteurs comprennent un premier connecteur (11) et un deuxième connecteur (12) qui sont reliés aux deux extrémités de la structure de connexion électrique (2); le premier connecteur (11) est muni à l'intérieur d'une cavité rotative (81) qui communique avec la première cavité (51) et la deuxième cavité (61), et le deuxième connecteur (12) est muni à l'intérieur d'une cavité d'adaptation (82) qui communique avec la première cavité (51); le deuxième manchon (6) est muni d'un tube d'admission (83) qui communique avec la deuxième cavité (61) et traverse une paroi extérieure du deuxième connecteur (12), de sorte qu'il fait saillie hors du deuxième connecteur (12); et dans lequel un tube de sortie (84), qui communique avec la cavité d'adaptation (82), est disposé à l'extérieur du deuxième connecteur (12); ou
dans laquelle lesdits plusieurs connecteurs comprennent un premier connecteur (11) et un deuxième connecteur (12) reliés à deux extrémités de la structure de connexion électrique (2); le premier connecteur (11) est muni à l'intérieur d'une cavité rotative (81) qui communique avec la première cavité (51) et la deuxième cavité (61), et le deuxième connecteur (12) est muni à l'intérieur d'une cavité d'adaptation (82) qui communique avec la deuxième cavité (61); le premier manchon (5) est muni d'un tube d'admission (83) qui communique avec la première cavité (51) et traverse une paroi extérieure du deuxième connecteur (12) pour faire saillie hors du deuxième connecteur (12); et dans lequel un tube de sortie (84), qui communique avec la cavité d'adaptation (82), est disposé à l'extérieur du deuxième connecteur (12).

12. Ensemble connecteur ayant une fonction de refroidissement de liquide selon la revendication 11, dans lequel une première structure d'étanchéité est disposée entre le tube d'admission (83) et le deuxième connecteur (12) ainsi qu'entre le tube de sortie (84) et le deuxième connecteur (12); ou
dans lequel une deuxième structure d'étanchéité (7) est disposée entre au moins l'un des multiples connecteurs (1) et le deuxième manchon (6).

13. Véhicule comportant l'ensemble connecteur ayant une fonction de refroidissement de liquide selon l'une des revendications 1 à 12, une pompe de circulation (9) et un dispositif de refroidissement (10), la première cavité (51) ou la deuxième cavité (61) communiquant avec la pompe de circulation (9) et le dispositif de refroidissement (10).

14. Véhicule selon la revendication 13, dans lequel un tube d'admission (83) de l'ensemble connecteur ayant une fonction de refroidissement de liquide est reliée à une entrée de liquide de la pompe de circulation (9), une sortie de liquide de la pompe de circulation (9) est reliée à une entrée de liquide du dispositif de refroidissement (10) et une sortie de liquide du dispositif de refroidissement (10) est reliée à un tube de sortie (84) de l'ensemble connecteur ayant une fonction de refroidissement de liquide.
